**Europäisches Patentamt**

**European Patent Office**

**Office européen des brevets**

(19)

(11) **EP 1 376 510 A2**

(12) **EUROPÄISCHE PATENTANMELDUNG**

(43) Veröffentlichungstag:
**02.01.2004 Patentblatt 2004/01**

(51) Int Cl.⁷: **G08G 1/01**, G08G 1/04

(21) Anmeldenummer: **03450152.8**

(22) Anmeldetag: **23.06.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **21.06.2002 AT 9392002**

(71) Anmelder: **JOANNEUM RESEARCH Forschungsgesellschaft mbH A-8010 Graz (AT)**

(72) Erfinder: **Graf, Franz 7511 Mischendorf (AT)**

(74) Vertreter: **Gibler, Ferdinand, Dipl.Ing. Dr. techn. Patentanwalt Dorotheergasse 7 1010 Wien (AT)**

(54) **System und Verfahren zur automatischen Überwachung eines Verkehrsweges**

(57) System zur automatischen Überwachung eines Verkehrsweges, insbesondere in einem Tunnel mit einer Vielzahl an vorbestimmbaren Meßpunkten entlang des zu überwachenden Verkehrsweges angeordneter Schallsensoren (41, 42, 43), die mit einer zentralen Überwachungs-Einheit (100) verbunden sind, wobei die zentrale Überwachungs-Einheit eine Einheit zur spektralen Analyse und Klassifikation (30) des von den Schallsensoren (41, 42, 43) aufgenommenen Geräusch-Schalls mit einem Alarm-Ausgang (20) umfaßt, welcher Alarm-Ausgang (20) mit einer Notfalls-Einrichtung (94) verbunden ist.

FIG.1

**Beschreibung**

Die Erfindung betrifft ein System zur automatischen Überwachung eines Verkehrsweges, insbesondere in einem Tunnel, mit einer Vielzahl an vorbestimmbaren Meßpunkten entlang des zu überwachenden Verkehrsweges angeordneter Schallsensoren, die mit einer zentralen Überwachungs-Einheit verbunden sind.

Durch die ständig steigende Anzahl an Verkehrsteilnehmern auf den Straßen und Autobahnen ist es nötig, neben besseren Systemen für das Verkehrsmanagement auch die Sicherheitssysteme an den Verkehrswegen zu verbessern. Spezielle Anforderungen an solche Verkehrs-Sicherheitssysteme ergeben sich im Bereich von Straßenverkehrs-Tunnels. Durch die erhöhte Unfallgefahr und den damit verbundenen Risiken ist der Einsatz von sicherheitstechnischen Maßnahmen zur Schadensbegrenzung notwendig, wobei im Falle eines Brandes es von höchster Wichtigkeit ist, den Unfallort möglichst schnell zu lokalisieren, damit bis zum Eintreffen der Löschmannschaften eine automatische Brandbekämpfung eingeleitet werden kann. Dies ist deshalb von besonderer Bedeutung, weil einerseits der zur Verfügung stehende Wasservorrat für eine vor Ort installierte Sprinkler-Anlage in den meisten Fällen begrenzt ist und andererseits das zu späte Aktivieren der Sprinkler-Anlage oder das Besprühen an der falschen Stelle innerhalb des Tunnels zu einer Behinderung der Löschmannschaften führen kann.

Weitere sicherheitstechnische Maßnahmen, wie die Warnung von nachfolgenden Kraftfahrzeugen sind ebenfalls von großer Bedeutung, um die Gefahr von Folgeunfällen bzw. einer Massenkarambolage mit nicht abschätzbaren Folgen zu verringern.

Durch die akustische Überwachung von Straßenverkehrsbereichen können Gefahrensituationen erkannt und Notmaßnahmen eingeleitet werden. Die im normalen Betrieb z.B. eines Tunnels auftretenden Geräusche werden durch Motor-, Roll- und Strömungsgeräusche der passierenden Fahrzeuge geprägt. Auftretende Anomalien im Geräusch, wie z.B. der Aufprall eines Fahrzeuges an der Tunnelmauer, der Aufprall eines Fahrzeuges auf ein anderes, Reifenquietschen od. dgl. können durch im Tunnel angebrachte Schallsensoren, z.B. Mikrophone, einfach detektiert werden.

Eine Schwierigkeit stellt dabei allerdings die Länge der zu überwachenden Straßenverkehrsbereiche dar, die mehrere Kilometer betragen kann und daher eine sehr hohe Anzahl von Mikrophonen erfordert, deren Signale alle laufend einer zentralen Überwachungs-Einheit zugeleitet werden müssen, um bei Verkehrsunfällen oder sonstigen die Verkehrssicherheit bedrohenden Vorkommnissen wirksame Maßnahmen ergreifen zu können. Eine stichprobenartige Kontrolle der von den Mikrophonen aufgenommenen Signale durch das Aufsichtspersonal, wie sie bei bekannten Systemen angewandt wird, stellt einen relativ großen Unsicherheitsfaktor dar.

Aufgabe der Erfindung ist es daher, ein System der eingangs genannten Art anzugeben, mit dem eine verläßliche automatische Beurteilung der von den Mikrophonen aufgenommenen Schallsignale vorgenommen werden kann und gegebenenfalls Notmaßnahmen eingeleitet werden können.

Erfindungsgemäß wird dies dadurch erreicht, daß die zentrale Überwachungs-Einheit eine Einheit zur spektralen Analyse und Klassifikation des von den Schallsensoren aufgenommenen Schalls mit einem Alarm-Ausgang umfaßt, welcher Alarm-Ausgang mit einer Notfalls-Einrichtung verbunden ist.

Durch die spektrale Analyse der im Bereich des Verkehrsweges auftretenden Geräusche können anomale Ereignisse, wie Reifenquietschen, Aufprall-Lärm od. dgl. automatisch identifiziert und einer bestimmten Alarm-Klasse zugeordnet werden. Je nach Bedarf können die erforderlichen Maßnahmen, wie die Alarmierung von Hilfsmannschaften, Verkehrsumleitung, die Betätigung einer automatischen Löschanlage od. dgl. entweder manuell nach einer Meldung an eine Tunnelwarte von einem Überwachungspersonal, z.B. einem Tunnelwart, oder auch automatisch eingeleitet werden.

Neben üblichen Einrichtungen wie Notrufsäulen, Brandmeldern usw. werden vermehrt auch Bildüberwachungsanlagen sowohl an Tunnelportalen als auch in den Tunnelröhren installiert. Damit ist es möglich, die Vorgänge auf dem Verkehrsweg von einer Tunnelwarte aus zu beobachten und bei einem Notfall die entsprechenden Maßnahmen einzuleiten. Durch die große Anzahl an Videokameras ist es dem Tunnelwart aber praktisch unmöglich, alle Kamerapositionen gleichzeitig zu überwachen. Dies führt dazu, daß bei einem Unfall dieser erst nach Betätigung einer Notrufsäule oder durch zufälliges Aufschalten der für den betreffenden Bereich vorgesehenen Videokamera auf einen Monitor in der Tunnelwarte erkannt wird. Nachkommende Fahrzeuge können nicht rechtzeitig gewarnt werden und die Gefahr von Folgeunfällen, z.B. eine Massenkarambolage, wird weiter erhöht.

In weiterer Ausbildung der Erfindung kann daher vorgesehen sein, daß jedem Schallsensor zumindest eine mit der zentralen Überwachungs-Einheit verbundene, auf einen Bereich des zu überwachenden Verkehrsweges gerichtete Bildaufnahmevorrichtung, insbesondere eine Video-Kamera zugeordnet ist.

Wird somit über einen Schallsensor des erfindungsgemäßen Systems eine Geräusch-Anomalie auf dem zu überwachenden Verkehrsweg erkannt und gemeldet, so kann das Bildsignal der zugeordneten Bildaufnahmevorrichtung sofort auf den Monitor der Tunnelwarte geschaltet und somit die Einleitung von Notfallsmaßnahmen erleichtert werden.

Die automatische Identifikation einer Geräusch-Anomalie wird durch die Analyse des Frequenzspektrums ermöglicht. Um eine schnelle und leistungsfähige Transformation des zeitlichen Schall-Meßsignals in den Frequenzbereich zu ermöglichen, ist gemäß einer weiteren Ausführungsform der Erfindung vorgesehen, daß die Einheit zur spektralen Analyse und Klassifikation einen Analog-Digitalwandler umfaßt, dessen Analog-Eingänge mit den Schallsensoren und dessen Ausgänge mit einer Rechen-Einheit verbunden sind, wobei der Alarm-Ausgang durch einen der Ausgänge der Rechen-Einheit gebildet ist.

Eine spektrale Analyse von Schall-Meßsignalen ist nur innerhalb eines bestimmten zeitlichen Bereiches sinnvoll und aussagekräftig. Gemäß einer weiteren Variante der Erfindung kann daher die Einheit zur spektralen Analyse und Klassifikation weiters eine Einheit zur zeitlichen Segmentierung der im Analog-Digitalwandler erzeugten digitalen Signale in zeitliche Blöcke umfassen.

Zur Berechnung der charakteristischen Eigenschaften jedes durch die zeitliche Segmentierung gebildeten Signalblockes wird eine Merkmalsextraktion durchgeführt, mit deren Hilfe eine Datenreduktion und eine Hervorhebung jener Variabilitäten, die zur Identifikation eines akustisches Signals erforderlich sind, erreicht wird. Zu diesem Zweck kann ein weiteres Merkmal der Erfindung darin bestehen, daß die Einheit zur spektralen Analyse und Klassifikation weiters einen Spektral-Analysator, einen Cepstral-Analysator und eine Einheit zur Berechnung der Signalenergie umfaßt, deren Eingänge mit dem Ausgang der Einheit zur zeitlichen Segmentierung verbunden sind.

In diesem Zusammenhang kann ein weiteres Merkmal der Erfindung darin bestehen, daß die Ausgänge des Spektral-Analysators und des Cepstral-Analysators mit den Eingängen einer Einheit zur Dimensionsreduktion verbunden sind, und daß der Ausgang der Einheit zur Dimensionsreduktion mit einem ersten Eingang eines Klassifikators und ein zweiter Eingang des Klassifikators mit dem Ausgang der Einheit zur Berechnung der Signalenergie verbunden sind, wobei der Ausgang des Klassifikators durch den Alarm-Ausgang gebildet ist. Im Klassifikator wird auf Basis der erkannten Signalklasse ein entsprechendes Alarmsignal ausgegeben, sodaß abhängig vom erkannten akustischen Ereignis die entsprechende Alarm-Klasse durch Ausgabe des zugehörigen Alarm-Signales aktiviert wird.

Eine automatische Auslösung von Notfallsmaßnahmen läßt sich auf einfache Weise dadurch erreichen, daß gemäß einer Weiterbildung der Erfindung der Alarm-Ausgang mit einer Lösch- und Warnanlage verbunden ist.

Weiters betrifft die Erfindung ein Verfahren zur automatischen Überwachung eines Verkehrsweges, insbesondere in einem Tunnel, wobei an vorbestimmbaren Meßpunkten entlang des zu überwachenden Verkehrsweges der Schall laufend aufgenommen und in Schall-Meßsignale gewandelt wird.

Die eingangs genannte Aufgabe der Erfindung wird für ein solches Verfahren erfindungsgemäß dadurch gelöst, daß die den Meßpunkten zugeordneten Schall-Meßsignale spektral analysiert und bei Detektion einer Anomalie in zumindest einem der Schall-Meßsignale ein Alarm ausgelöst wird, sodaß im Bereich des Meßpunktes, dem das anomale Schall-Meßsignal zugeordnet ist, eine Notfalls-Maßnahme veranlaßt wird.

Auf diese Weise ermöglicht die erfindungsgemäß durchgeführte spektrale Analyse der über die Schallsensoren aufgenommenen Schall-Meßsignale bei Vorliegen eines anomalen Geräuschpegels die automatische Alarmweiterleitung mit einer Ortsinformation über das Ereignis.

Die dem Unfallsgeschehen zugehörige Bildinformation kann auf vorteilhafte Weise dadurch erhalten werden, daß gemäß einer Weiterbildung der Erfindung bei Detektion einer Anomalie weiters auf einem Monitor das Bildsignal einer im Bereich des Meßpunktes, dem das anomale Schall-Meßsignal zugeordnet ist, angeordneten Bildaufnahmevorrichtung, insbesondere einer Video-Kamera angezeigt und zugleich das anomale Schall-Meßsignal wiedergegeben wird.

Eine spektrale Analyse setzt eine entsprechende Signalaufbereitung voraus, die den dafür durchzuführenden Rechenvorgang unterstützt. Gemäß einer Variante der Erfindung ist daher vorgesehen, daß die den Meßpunkten zugeordneten Schall-Meßsignale in digitale Signale gewandelt und in Signalblöcke, vorzugsweise mit einer Blocklänge zwischen 50ms und 1500 ms, zeitlich segmentiert werden. Die auf diese Weise erzeugten Signalblöcke enthalten hinreichende Information zur Bewertung eines Ereignisses, durch die zeitliche Begrenzung wird ermöglicht, daß mehrere aufeinanderfolgende Ereignisse unterschieden werden können.

Zur Erhöhung der Auflösung kann gemäß einem weiteren Merkmal der Erfindung vorgesehen sein, daß die einzelnen Signalblöcke mit einer Überlappung, vorzugsweise in einem Bereich von 20% bis 70%, aus den Schall-Meßsignalen extrahiert werden.

Eine weitere Variante der Erfindung kann darin bestehen, daß an den Signalblöcken eine Merkmalsextraktion durchgeführt wird durch:

    i) Berechnung des Leistungsdichtespektrums durch Transformation aus dem Zeitbereich in den Frequenzbereich und
    ii) Berechnung von Cepstrum-Koeffizienten durch Inverse Fourier-Transformation des logarithmierten Leistungsdichtespektrums,
    iii) Berechnung der Signalenergie innerhalb einer vorbestimmbaren Fensterlänge,

    und daß aus in den Schritten i) und ii) erhaltenen Merkmalsvektoren durch Dimensionsreduktion ein in seiner Dimension reduzierter Merkmalsvektor berechnet wird, welcher nachfolgend unter Berücksichtigung der in Schritt iii) berechneten Signalenergie einer Klassifikation unterzogen wird.

Dadurch können die charakteristischen Eigenschaften jedes Signalblockes berechnet werden und eine nachfolgende Klassifikation wird erleichtert. Durch die Merkmalsextraktion erhält man eine Reduktion der Datenmenge und eine Hervorhebung jener Variabilitäten, die zur Identifikation eines akustischen Signales hilfreich und notwendig sind.

Schließlich kann eine weitere Ausführungsform der Erfindung darin bestehen, daß die Klassifikation durch einen Vergleich von in einem Lernmodus aus Lernsignalen ermittelten Klassenmodellen mit dem jeweils aktuellen Merkmalsvektor erhalten wird.

Auf diese Weise kann die Auslösung eines Alarm-Signals präzise vorherbestimmbar durchgeführt werden.

Nachfolgend wird die Erfindung anhand des in den Zeichnungen dargestellten Ausführungsbeispiels eingehend erläutert. Es zeigt dabei

Fig. 1 eine schematische Darstellung einer Tunnel-Verkehrsstrecke;
Fig.2 ein Blockschaltbild einer Ausführungsform des erfindungsgemäßen Systems;
Fig.3 ein Blockschaltbild der durch eine Recheneinheit realisierten Funktionsgruppen;
Fig.4 eine schematische Darstellung eines Klassifikators und
Fig.5 ein Diagramm der Amplitude in Abhängigkeit von der Frequenz für eine Dreieck-Filterbank für 26 Frequenzgruppen.

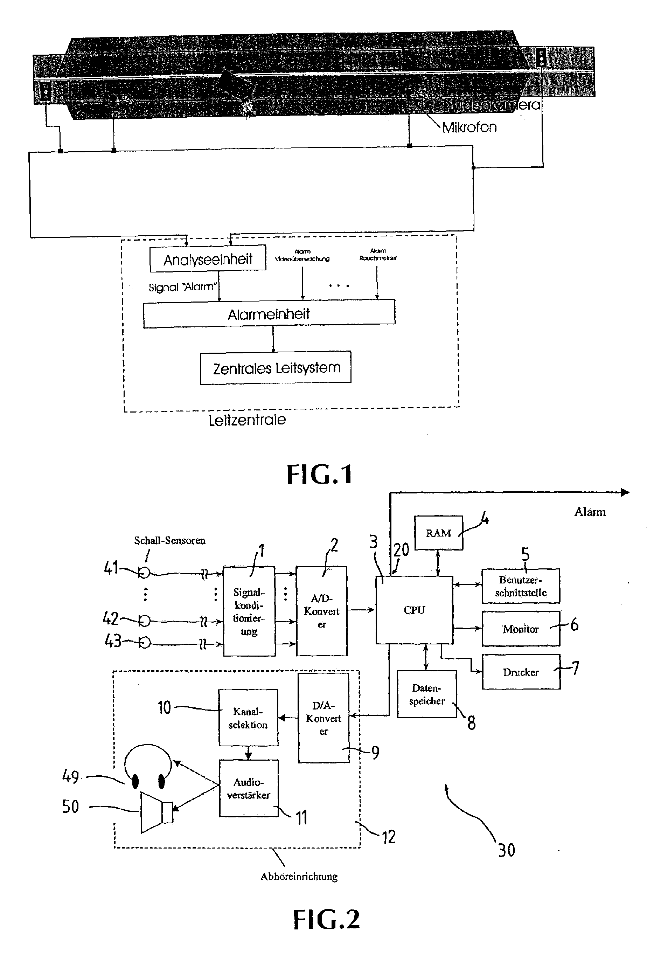

Fig. 1 zeigt ein typisches Verkehrsgeschehen in einem Tunnel 80, der stellvertretend für einen zu überwachenden Verkehrsweg dargestellt ist. Zwei Personenkraftfahrzeuge 33, 34 und ein Lastkraftfahrzeug 35 stellen dabei beispielhaft verschiedene Typen von Fahrzeugen dar, die im Allgemeinen Tunnels durchfahren. Das Personenkraftfahrzeug 34 verursacht gerade einen Anfahrunfall an einer Tunnelwand. Fig.2 zeigt ein System zur automatischen Überwachung des in Fig. 1 gezeigten Verkehrsweges, insbesondere des Tunnels 80, es kann aber auch jeder andere Verkehrsweg auf diese Weise überwacht werden. Zu diesem Zweck sind, wie in Fig.1 angedeutet, mehrere, an vorbestimmbaren Meßpunkten entlang des zu überwachenden Verkehrsweges angeordnete Schallsensoren 41, 42, 43 vorgesehen, die mit einer zentralen Überwachungs-Einheit 100 verbunden sind.

Die im Tunnel fahrenden Fahrzeuge 33, 34, 35 erzeugen während der Fahrt z.B. Motor-, Roll- und Strömungsgeräusche, deren Schallwellen in die umgebende Luft abgestrahlt werden. Die Amplitude der Schallwellen kann auf unterschiedliche Weise beschrieben werden, z.B. als Geschwindigkeit der Bewegung der Luftmoleküle (Schallschnelle) oder als Druck, der im Allgemeinen zur Beschreibung der Amplitude bevorzugt verwendet wird. Der Schalldruck ergibt sich durch die Fluktuation des Luftdruckes über und unter dem atmosphärischen Luftdruck.

Die Schallsensoren 41, 42, 43, die zur Umwandlung des Schalldruckes in ein elektrisches Signal dienen, sind beispielsweise durch elektroakustische Wandler gebildet, es können aber auch andere geeignete Schallsensoren für diesen Zweck vorgesehen sein. Auch der Anbringungsort und der Abstand zwischen den Schallsensoren 41, 42, 43 kann entsprechend variieren, ihre Anbringung erfolgt vorzugsweise an den Begrenzungsflächen des Tunnels 80 oder an speziellen, im Tunnel 80 vorgesehenen Orten. Für die Anbringung der Schallsensoren 41, 42, 43 eignen sich im konkreten Ausführungsbeispiel besonders gut die Bereiche der Tunnelwände bzw. der Tunneldecke.

Weiters können die Schallsensoren 41, 42, 43 in Kombination mit weiteren Sensoren, z.B. Rauchmeldern, Temperaturfühlern od. dgl. angebracht sein. Jedem Schallsensor 41, 42, 43 ist vorzugsweise zumindest eine mit der zentralen Überwachungs-Einheit verbundene, auf einen Bereich des zu überwachenden Verkehrsweges 80 gerichtete Bildaufnahmevorrichtung, insbesondere eine Video-Kamera 81, 82 (Fig. 1) zugeordnet. Dabei werden die von den Schallsensoren 41, 42, 43, den weiteren Sensoren und/oder den Videokameras 81, 82 abgegebenen Signale vorzugsweise über getrennte Signalleitungen oder nach Modulation und/oder Kodierung über eine gemeinsame Signalleitung 88 zur zentralen Überwachungs-Einheit 100 weitergeleitet. Die Schall-Meßsignale und weitere Sensorsignale können jedoch auch durch eine drahtlose Verbindung, z.B. über Funk, Infrarot od. dgl. oder Local Area Networks (LAN), z.B. wireless LAN an die zentrale Überwachungs-Einheit 100 übertragen werden.

Die Schallsensoren 41, 42, 43 messen die Stärke der Schallwellen, bevorzugt den Schalldruck der Schallwellen, wenn sich die Fahrzeuge 33, 34, 35 innerhalb des Tunnels 80 einem der Meßpunkte, an dem einer der Schallsensoren 41, 42, 43 angebracht ist, nähern bzw. diesen passieren. Die auf die Schallsensoren 41, 42, 43 auftreffende Schallenergie wird in ein analoges oder digitales elektrisches Signal umgewandelt. Bevorzugt werden Schallsensoren verwendet, die ein Analogsignal als Funktion der Zeit erzeugen, das proportional zum einwirkenden Schalldruck ist und zur zentralen Überwachungs-Einheit 100 übertragen wird. Im Rahmen der Erfindung kann eine beliebige Anzahl an Schallsensoren entlang des zu überwachenden Verkehrsweges Verwendung finden.

Erfindungsgemäß umfaßt die zentrale Überwachungs-Einheit 100 eine Einheit zur spektralen Analyse und Klassifikation 30 des von den Schallsensoren 41, 42, 43 aufgenommenen Schalls mit einem Alarm-Ausgang 20, der mit einer Notfalls-Einrichtung 94 verbunden ist.

Auch die Ausgänge 92, 91 der in Fig.1 angedeuteten Videoüberwachung und eines Rauchmelders sind mit der Notfalls-Einrichtung 94 verbunden.

Das erfindungsgemäße Verfahren besteht dabei darin, daß an den Meßpunkten entlang des zu überwachenden Verkehrsweges der Schall laufend aufgenommen und in - analoge oder digitale - Schall-Meßsignale gewandelt wird. Die den Meßpunkten zugeordneten Schall-Meßsignale werden spektral analysiert und bei Detektion einer Anomalie, wie es z.B. in Fig.1 für das Fahrzeug 34 der Fall ist, in zumindest einem der Schall-Meßsignale ein Alarm ausgelöst, sodaß im Bereich des Meßpunktes, dem das anomale Schall-Meßsignal zugeordnet ist, eine Notfalls-Maßnahme veranlaßt wird.

Ferner kann über die Notfalls-Einrichtung 94 bei Detektion einer Anomalie auf einem Monitor der zentralen Überwachungseinheit 100 das Bildsignal einer im Bereich des Meßpunktes, dem das anomale Schall-Meßsignal zugeordnet ist, angeordneten Bildaufnahmevorrichtung, insbesondere z.B. der Video-Kamera 81 oder 82 angezeigt und zugleich das anomale Schall-Meßsignal, das von den Schallsensoren 41, 42 aufgenommen wird, wiedergegeben werden. Das Aufsichtspersonal kann auf Grundlage der so bereitgestellten Informationen Notfallsmaßnahmen treffen oder es kann über die Verbindung der Notfalls-Einrichtung 94 mit einem zentralen Leitsystem 95, das in Fig. 1 als Teil der zentralen Überwachungs-Einheit 100 ausgebildet ist, eine automatische Benachrichtigung von Hilfsmannschaften erfolgen oder z.B. Ampelanlagen 83, 84 im Bereich der Tunnel-Einfahrten entsprechend der Notfalls-Situation geschaltet werden.

Fig.2 zeigt das Blockschaltbild eines beispielhaften Hardware-Aufbaus der Einheit zur spektralen Analyse und Klassifikation 30. Die in den Schallsensoren 41, 42, 43 erzeugten analogen Schall-Meßsignale, die den Schalldrücken an diesen entsprechen, werden über Signalleitungen an eine Signalkonditionierungs-Einheit 1 weitergeleitet, welche die Verstärkung der analogen Schall-Meßsignale vornimmt. Der Verstärkungsfaktor kann entweder fest, bevorzugt zwischen 1000 und 10000, oder automatisch eingestellt sein.

Die Einheit zur spektralen Analyse und Klassifikation 30 umfaßt weiters einen Analog-Digitalwandler 2, dessen Analog-Eingänge über die zwischengeschaltete Signalkonditionierungs-Einheit 1 mit den Schallsensoren 41, 42, 43 und dessen Ausgänge mit einer Rechen-Einheit 3 verbunden sind, wobei der Alarm-Ausgang 20 durch einen der Ausgänge der Rechen-Einheit 3 gebildet ist.

Im Analog-Digitalwandler 2 werden die analogen Signale in diskrete Werte umgesetzt, welche den Schalldruck an den Schallsensoren 41, 42, 43 repräsentieren. Die Abtastrate des Analog-Digitalwandlers 2 kann unterschiedlich sein und liegt im Allgemeinen zwischen 4 kHz und 50 kHz. Besonders gut eignen sich Abtastfrequenzen zwischen 6kHz und 16kHz. Die Analog-Digitalwandlung kann aber auch bereits in den Schallsensoren 41, 42, 43 erfolgen.

Die Auflösung des Analog-Digitalwandlers 2 liegt z.B. im Bereich von 8 Bit bis 24 Bit, wobei ein Bereich von 12 Bit bis 20 Bit bevorzugt wird.

Die Rechen-Einheit 3 ist gemäß Fig.2 zusätzlich mit einem Arbeitsspeicher (RAM) 4, einer Benutzer-Schnittstelle 5, einem Monitor 6, einem Drucker 7 und einem Datenspeicher 8 verbunden. In der Rechen-Einheit 3 werden auf Grundlage der mit den Schallsensoren 41, 42, 43 gemessenen Schall-Meßwerte Berechnungsschritte zur Analyse des auf dem zu überwachenden Verkehrsweg auftretenden Geräuschschalls durchgeführt. Die Rechen-Einheit 3 kann z.B. die CPU eines im Handel erhältlichen Personal-Computers oder jede andere geeignete CPU sein. Auf dem Monitor 6 können Ergebnisse der in der Rechen-Einheit 3 ausgewerteten Daten on-line oder off-line angezeigt werden. Über die Benutzer-Schnittstelle 5 kann ein Anwender seine Eingaben an die Rechen-Einheit 3 richten. Das Ergebnis der in der Rechen-Einheit 3 vorgenommenen Analyse wird über den Alarm-Ausgang 20 an die Schnittstelle der nicht dargestellten Notfall-Einrichtung weitergegeben.

Das erfindungsgemäße System verfügt weiters über eine Wiedergabeeinrichtung 12 mit einem an die Rechen-Einheit 3 angeschlossenen Digital-Analogwandler 9. Die Wiedergabeeinrichtung 12 ermöglicht das Abhören der von den Schallsensoren 41, 42, 43 aufgenommenen Signale. Zwischen dem Digital-Analogwandler 9 und einem Audio-Verstärker 11 ist ein Kanal-Selektor 10 angeordnet, über den die Auswahl bestimmter Sensorsignale erfolgen kann. Der Audio-Verstärker 11 ist mit einem Kopfhörer 49 oder mit einem Lautsprecher 50 verbindbar, über die man die von den Schallsensoren 41, 42, 43 aufgenommenen Schallsignale abhören kann.

Mittels der Benutzer-Schnittstelle 5 kann beispielsweise zwischen zwei Betriebsarten gewählt werden. In einer ersten Betriebsart kann der Anwender die von den Schallsensoren 41, 42, 43 in Echtzeit aufgenommenen Schall-Meßsignale abhören. In einer zweiten Betriebsart können bestimmte ausgewählte Schall-Meßsignale, die zuvor digitalisiert und im Datenspeicher 8 digitalisiert wurden, abgehört werden. Der Datenspeicher 8 kann dazu verwendet werden, sowohl die aufgezeichneten Schall-Meßsignale als auch die Ergebnisse der der in der Rechen-Einheit 3 berechneten Analyse der Geräusche zu speichern.

Der Datenspeicher 8 kann dabei jede mögliche Form eines digitalen Datenspeichers, insbesondere ein magnetischer, optischer oder ein magneto-optischer Datenspeicher sein.

Zur Erstellung von Berichten, Tabellen, Statistiken und zum Ausdrucken von Ergebnissen der Analyse in Papierform ist der Drucker 7 vorgesehen. Die erstellten Druckwerke dienen der Archivierung oder zum Vergleich mit anderen Druckwerken.

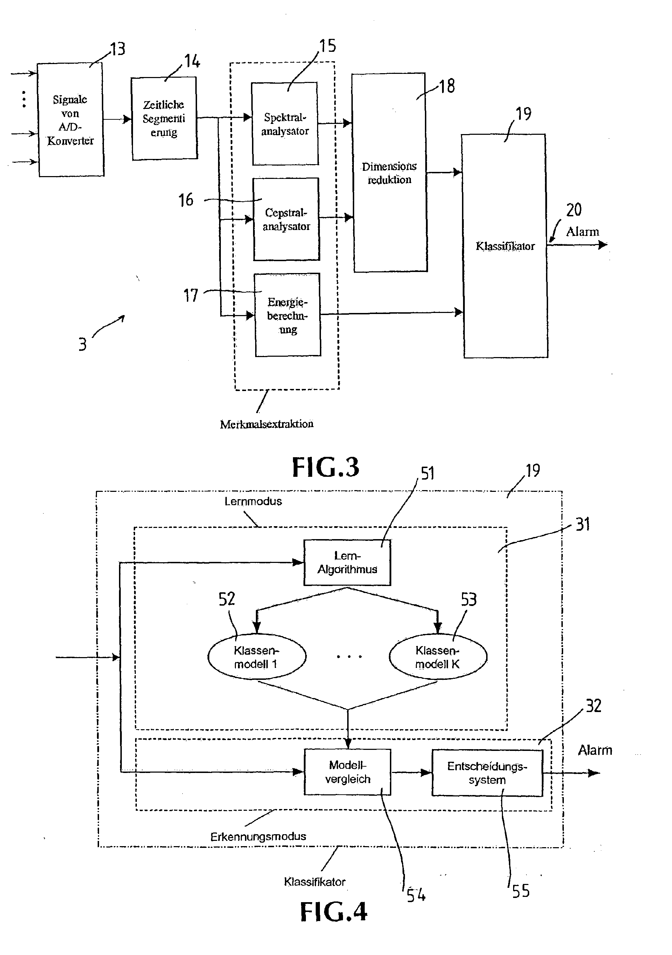

Die in der Rechen-Einheit 3 vorgenommenen Berechnungen zum Zwecke der Analyse der Schall-Meßsignale sind in Fig.3 in Form von Funktionsblöcken 14, 15, 16, 17, 18 und 19 dargestellt, welche unterschiedliche mathematische Operationen ausführen, die nachfolgend erläutert sind. Die Funktionsblöcke 14, 15, 16, 17, 18 und 19 werden somit durch die Rechen-Einheit 3 realisiert.

Die Einheit zur spektralen Analyse und Klassifikation 30 umfaßt zu diesem Zweck eine Einheit zur zeitlichen Segmentierung 14 der im Analog-Digitalwandler 2 erzeugten digitalen Signale in zeitliche Blöcke sowie einen Spektral-Analysator 15, einen Cepstral-Analysator 16 und eine Einheit zur Berechnung der Signalenergie 17, deren Eingänge mit dem Ausgang der Einheit zur zeitlichen Segmentierung 14 verbunden sind.

Die Ausgänge des Spektral-Analysators 15 und des Cepstral-Analysators 16 sind mit den Eingängen einer Einheit zur Dimensionsreduktion 18 verbunden. Der Ausgang der Einheit zur Dimensionsreduktion 18 ist mit einem ersten Eingang eines Klassifikators 19 und ein zweiter Eingang des Klassifikators 19 ist mit dem Ausgang der Einheit zur Berechnung der Signalenergie 17 verbunden, wobei der Ausgang des Klassifikators 19 durch den Alarm-Ausgang 20 gebildet ist.

Die Daten aus dem Analog-Digitalwandler 2 gelangen über eine Schnittstelle 13 in die Einheit zur zeitlichen Segmentierung 14, in der die diskreten Schall-Meßsignale in zeitliche Blöcke unterteilt werden, weil die Verarbeitung von akustischen Signalen mit einer Länge von mehr als 10 s nicht mehr praktikabel ist. Einerseits könnten in diesem Fall mehrere Arten von akustischen Signalen im Schall-Meßsignal enthalten sein, andererseits können zu kurze Signale mit einer Länge von Bruchteilen einer Millisekunde das zeitliche Verhalten eines akustischen Signals nicht widerspiegeln.

Die digitalisierten Schall-Meßsignale werden daher in Signalblöcke, vorzugsweise mit einer Blocklänge zwischen 50ms und 1500 ms, zeitlich segmentiert, wobei die einzelnen Signalblöcke mit einer Überlappung, vorzugsweise in einem Bereich von 20% bis 70%, aus den Schall-Meßsignalen extrahiert werden.

Um mit vertretbarem Rechenaufwand die charakteristischen Eigenschaften jedes Signalblockes zu berechnen und eine nachfolgende Klassifikation zu ermöglichen, wird Merkmalsextraktion angewandt, welche nachfolgend erläutert wird. Es soll damit jeder Signalblock durch Anwendung von Transformationen in eine für die weitere Verarbeitung geeignete parametrische Form gebracht werden. Durch die Merkmalsextraktion ist eine Reduktion der durch die laufende Messung über die Schallsensoren 41, 42, 43 anstehende Datenmenge und eine Hervorhebung jener Variabilitäten möglich, die zur Identifikation eines akustischen Signals hilfreich bzw. notwendig sind.

An den einzelnen durch zeitliche Segmentierung gewonnenen Signalblöcken wird die Merkmalsextraktion durchgeführt durch:

i) Berechnung des Leistungsdichtespektrums durch Transformation aus dem Zeitbereich in den Frequenzbereich und

ii) Berechnung von Cepstrum-Koeffizienten durch Inverse Fourier-Transformation des logarithmierten Leistungsdichtespektrums,

iii) Berechnung der Signalenergie innerhalb einer vorbestimmbaren Fensterlänge.

Aus in den Schritten i) und ii) erhaltenen Merkmalsvektoren wird durch Dimensionsreduktion ein in seiner Dimension reduzierter Merkmalsvektor berechnet, welcher nachfolgend unter Berücksichtigung der in Schritt iii) berechneten Signalenergie einer Klassifikation unterzogen wird.

Im einzelnen wird die Merkmalsreduktion wie folgt vollzogen. Dabei steht die Variable t für die Zeit, T für die Länge eines Signalblockes und i für die Nummer des Signalblockes innerhalb des gesamten Schall-Meßsignals. $s_i(t)$ bezeichnet das Signal im Zeitbereich des i-ten Blockes, Si(w) das Frequenzspektrum des i-ten Blockes. Die Variable w entspricht der Momentanfrequenz.

Der Spektral-Analysator 15 transformiert die einzelnen Signalblöcke aus dem Zeitbereich in den Frequenzbereich, wobei standardmäßig die Fourier-Transformation angewendet wird. Besonders gut eignet sich hiefür die sogenannte Fast-Fourier-Transformation (FFT), die einer digitalen Approximation der Fourier-Transformation entspricht.

Die Fourier-Transformierte einer Funktion s(t) ist mathematisch definiert als:

$$S(w) = \int s(t)e^{2i\pi wt}dt$$

Das Ausgangssignal des Spektral-Analysators 15 entspricht dem Leistungsdichtespektrum des Signals an seinem Eingang und beschreibt die Höhe der Energie an einem bestimmten Frequenz-bin w. Die Anzahl der Frequenz-bins ist abhängig von der Anzahl der diskreten Abtastwerte, die durch Anwendung der Fast-Fourier-Transformation aus dem zeitlichen Signal entnommen werden, und steht in direktem Zusammenhang mit der oben erwähnten Blocklänge T. Die durch den Spektral-Analysator 15 berechneten Spektren werden anschließend in die Einheit zur Dimensionsreduktion 18 übergeben.

Neben der Fourier-Transformation zur Berechnung des spektralen Inhalts eines Zeitsignals können auch andere Methoden, wie z.B. das Linear Prediction Coding eingesetzt werden.

Der Cepstral-Analysator 16 dient wie der Spektral-Analysator 15 zur Berechnung von Merkmalen zur Charakterisierung von Schall-Meßsignalen. Das Cepstrum eines zeitlichen Signals wird durch die Inverse Fourier-Transformation des logarithmierten Leistungsdichtespektrum erhalten und ist wie folgt definiert:

$$c(\tau) = FFT^{-1}\{\log(FFT\{s(t)\})\} = FFT^{-1}\{\log S(w)\}$$

Die Cepstrum-Koeffizienten werden dabei mit $c(\tau)$ bezeichnet, FFT steht als Abkürzung für die Fast-Fourier-Transformation und $FFT^{-1}$ bezeichnet die Inverse Fast-Fourier-Transformation. Nach Berechnung der Cepstrum-Koeffizienten werden diese an die Einheit zur Dimensionsreduktion 18 übergeben, wo diese weiter verarbeitet werden. Die Berechnung des Cepstrums kann auch unter Verwendung des bereits berechneten Spektrums aus der Fourier-Transformation erfolgen. Damit kann ein Berechnungsschritt eingespart werden.

Als weiteres Merkmal zu Beschreibung von akustischen Signalen dient die Energie. Im Allgemeinen wird die Beziehung zur Ermittlung der Signalenergie durch folgende Gleichung beschrieben:

$$E_n = \sum_{-\infty}^{+\infty} s^2(t)$$

Da zur Beschreibung von akustischen Signalen der Verlauf der Energie in Abhängigkeit von der Zeit interessiert, eignet sich besonders der Einsatz der Kurzzeit-Signalenergie. Sie ist definiert als:

$$E_n = \sum_{k=-\infty}^{+\infty} [s(t) \cdot w(t-k)]^2$$

wobei

$$w(t) = \begin{cases} 1 & \text{für } 0 \le t \le T \\ 0 & \text{für} \quad \text{sonst} \end{cases}$$

Durch die Wahl der Fensterlänge kann der erhaltene Verlauf der Signalenergie wesentlich beeinflußt werden. Die Verwendung großer Fensterlängen entspricht einer Tiefpaßfilterung mit einer niedrigen Grenzfrequenz und hat zur Folge, daß kurzzeitige Schwankungen des Signals in der Signalenergie nicht widergespiegelt werden. Kurze Fensterlängen ergeben hingegen einen Verlauf der Signalenergie, der sich weitgehend an die zeitliche Struktur des akustischen Signals anlehnt. Die Blocklängen T zur Berechnung der Energie entsprechen den oben angeführten Werten und können zwischen 50 ms und 1500 ms liegen. Die berechneten Werte werden zusammen mit dem Ergebnis der Dimensionsreduktion 18 dem Klassifikator 19 übergeben, in welchem ein Alarm-Signal an den Alarm-Ausgang 20 gegeben werden kann.

Die Dimensionsreduktion 18 dient dazu, um aus den vom Spektral-Analysator 15 und dem Cepstral-Analysator 16 gelieferten Merkmalsvektoren einen in seiner Dimension reduzierten Merkmalsvektor zu generieren, der eine möglichst optimale nachfolgende Klassifikation erlaubt. Dieser reduzierte Merkmalsvektor soll möglichst gute Merkmale beinhalten. Die Definition der Eigenschaft "gut" bezieht sich in diesen Fall auf die Verwendung von bestimmten Merkmalen zur Klassifizierung von Signalen. So können bestimmte Merkmale sehr viel über die Klassenzugehörigkeit eines Signales aussagen, während andere eher in einem zufälligen Bezug zur entsprechenden Klasse stehen. Die Reduktion der einzelnen Merkmalsvektoren wird wie folgt durchgeführt:

Der Spektralanalysator 15 liefert abhängig von der Blocklänge T bzw. der Länge der Fourier-Transformation für jeden Frequenz-bin einen Wert. Die Dimension des auf diese Weise erhaltenen Merkmalsvektors liegt im Allgemeinen zwischen $2^5=32$ und $2^{16}= 65536$. Die so erhaltenen Fourier-Koeffizienten, die die Verteilung der im Signal enthaltenen Energie in den einzelnen Frequenzabschnitten beschreiben, spiegeln jedoch nicht die gehörrichtige Energieintegration des menschlichen Gehörs wider.

Diese wird meist mittels einer Bank von Bandpaßfiltern modelliert, wobei die einzelnen Frequenzgruppenfilter normalerweise durch ihre Mittenfrequenz und ihre Bandbreite charakterisiert sind. Zur Nachbildung der basilaren Erregungsverteilungen sind aus der Literatur Bänke von Dreieck-, Rechteck- oder Trapezfiltern bekannt, deren Bandbreite bei tiefen Frequenzen geringer ist als bei hohen Frequenzen. Die Anzahl der Bandpaßfilter liegt im Allgemeinen zwischen 5 und 50. Besonders gut eignen sich Filterbänke mit einer Größe von 15 bis 30 Filterbänken.

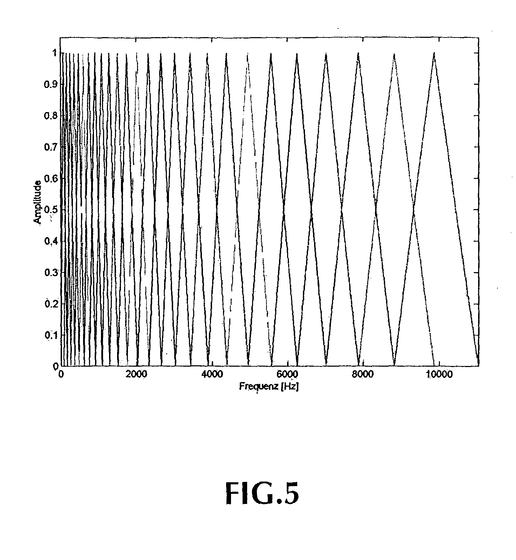

Fig.5 zeigt den Frequenzgang einer Dreieckfilterbank mit 26 Frequenzgruppen.

Zur Dimensionsreduktion besteht weiters die Möglichkeit, die Frequenz-bins in bestimmten Frequenzbereichen zusammenzufassen und auf diese Weise einen dimensionsreduzierten Merkmalsvektor zu erhalten. Für diese Vorgangsweise eignen sich insbesondere Frequenzbereiche mit markanten Charakteristika, wie z.B. Frequenzresonanzen. Die Lage und die Bandbreite dieser Frequenzbereiche im Spektrum ist abhängig von den auftretenden akustischen Signalen und unterliegen somit keinen Einschränkungen.

Der Cepstral-Analysator 16 liefert wie auch der Spektral-Analysator 15 einen Merkmalsvektor, indem die berechneten Cepstral-Koeffizienten enthalten sind. Die Dimension des vom Cepstral-Analysators 16 gelieferten Vektors liegt im Allgemeinen zwischen $2^5=32$ und

$2^{16}$= 65536. Durch eine auf dem Gebiet der Digitalen Signalverarbeitung allgemein bekannte Technik des "Lifterns" werden aus dem erhaltenen Vektor der Cepstral-Koeffizienten nur jene, die die Charakteristik des akustischen Signals widerspiegeln, weiterverwendet. Die Lifterung wird durch den Einsatz einer Fensterfunktion durchgeführt, die mit dem Merkmalsvektor multipliziert wird:

$$c_L(t) = \sum_{t=0}^{T} c(t) \cdot w(t)$$

wobei

$$w(t) = \begin{cases} 0 & \text{für } 0 \leq t \leq t_1 \\ 1 & \text{für } t_1 \leq t \leq t_2 \\ 0 & \text{für } t_2 \leq t \leq T \end{cases}$$

$C_L$ bezeichnet dabei den reduzierten (gelifterten) Merkmalsvektor, w(t) steht für die Fensterfunktion. $t_1$ und $t_2$ stehen für die Grenzen, innerhalb derer die Fensterfunktion den Wert gleich eins annimmt. Durch diesen Vorgang der Lifterung wird ein dimensionsreduzierter Merkmalsvektor erhalten, der an den nachfolgenden Klassifikator 19 (Fig.4) übergeben wird.

Der aus der Dimensionsreduktion 18 erhaltene Merkmalsvektor wird im Anschluß im Klassifikator 19 weiterverarbeitet. Die Merkmalsvektoren einer Signalklasse sind einander meist ähnlich, die Merkmalsvektoren verschiedener Signalklassen unterscheiden sich meist sehr stark voneinander. Die Zuordnung eines Merkmalsvektors zu einer der definierten Klassen wird als Klassifikation bezeichnet. Der Klassifikator 19 kann in zwei Modi betrieben werden, wie es in Fig.4 skizziert ist.

Der erste Modus wird auch als Lernmodus 31 bezeichnet und dient dazu, um für jede Klasse eines akustischen Signals ein mathematisches Modell zu erzeugen. Mit Hilfe eines Lernalgorithmus 51 und zugeführter Lernsignale ergeben sich dadurch bei K unterschiedlichen Signalklassen die Klassenmodelle 1 bis K, welche in Fig.4 mit 52 und 53 bezeichnet sind. Unter dem Lernalgorithmus wird eine Abfolge von mathematischen Berechnungsschritten verstanden, um in iterativer Form ein mathematisches Modell zu approximieren. Lernalgorithmen wie das Hebbsche Lernverfahren, die Backpropagation-Regel und der Forward-Backward-Algorithmus sind aus der Literatur bekannt und für diesen Zweck anwendbar. Jene akustischen Signale, die zum Lernen verwendet werden, werden als Lernsignale bezeichnet. Der Korpus der Lernsignale beinhaltet aus jeder der Signalklassen akustische Signale, die repräsentativ für die jeweilige Signalklasse sind. Die Lernphase wird normalerweise nur einmal vor dem Einsatz des Systems als Signalerkenner durchlaufen. Es kann jedoch auch notwendig sein, bestimmte Klassenmodelle mit zusätzlichen Lernsignalen zu trainieren, da sie oftmals eine ungenügende Erkennungsrate aufweisen. Es ist auch weiters möglich, nach der Lernphase zusätzlich Klassenmodelle hinzuzufügen.

Der zweite Modus wird als Erkennungsmodus 32 bezeichnet und stellt jenen Modus dar, der im Normalbetrieb des Erkennungssystems verwendet wird. Während der Erkennungsphase wird einem aktuell vorliegenden akustischen Signal eine der K Signalklassen zugeordnet. Im Zuge des Erkennungsvorganges wird das momentane akustische Signal, das durch den Merkmalsvektor repräsentiert wird, in einem Modellvergleich 54 mit allen Klassenmodellen verglichen und ein geeignetes Maß für die Übereinstimmung des Testsignals mit den einzelnen Modellen berechnet. Das Ergebnis des Modellvergleichs wird anschließend von einem Entscheidungssystem 55 weiterverarbeitet.

Da Entscheidungssystem 55 hat die Aufgabe, auf Basis der erkannten Signalklasse ein entsprechendes Alarm-Signal auszugeben. Das Alarm-Signal kann verschiedene Signalzustände annehmen, die abhängig vom erkannten akustischen Signal sind. Diese Signalzustände können mehreren Alarm-Klassen zugeordnet werden, so daß abhängig von erkannten akustischen Ereignis die entsprechende Alarm-Klasse durch Ausgabe des zugehörigen Alarm-Signals aktiviert wird.

Das von der Einheit zur spektralen Analyse und Klassifikation 30 ausgegebene Alarm-Signal wird z.B. an die Notfalls-Einrichtung 94 in der zentralen Überwachungs-Einheit 100 übergeben. Die Notfalls-Einrichtung 94 dient z.B. dazu, Alarmsignale aus zusätzlichen im Tunnel verwendeten Überwachungseinrichtungen zu kombinieren, wie bereits in Zusammenhang mit Fig. 1 erläutert worden ist.

**Patentansprüche**

**1.** System zur automatischen Überwachung eines Verkehrsweges, insbesondere in einem Tunnel, mit einer Vielzahl an vorbestimmbaren Meßpunkten entlang des zu überwachenden Verkehrsweges angeordneter Schallsensoren, die mit einer zentralen Überwachungs-Einheit verbunden sind, **dadurch gekennzeichnet, daß** die zentrale Überwachungs-Einheit (100) eine Einheit zur spektralen Analyse und Klassifikation (30) des von den Schallsensoren (41, 42, 43) aufgenommenen Schalls mit einem Alarm-Ausgang (20) umfaßt, welcher Alarm-Ausgang (20) mit einer Notfalls-Einrichtung (94) verbunden ist.

**2.** System nach Anspruch 1, **dadurch gekenn-**

**zeichnet, daß** jedem Schallsensor (41, 42, 43) zumindest eine mit der zentralen Überwachungs-Einheit verbundene, auf einen Bereich des zu überwachenden Verkehrsweges gerichtete Bildaufnahmevorrichtung, insbesondere eine Video-Kamera (81, 82) zugeordnet ist.

**3.** System nach Anspruch 1 oder 2, **dadurch gekennzeichnet, daß** die Einheit zur spektralen Analyse und Klassifikation (30) einen Analog-Digitalwandler (2) umfaßt, dessen Analog-Eingänge mit den Schallsensoren (41, 42, 43) und dessen Ausgänge mit einer Rechen-Einheit (3) verbunden sind, wobei der Alarm-Ausgang (20) durch einen der Ausgänge der Rechen-Einheit (3) gebildet ist.

**4.** System nach Anspruch 1, 2 oder 3, **dadurch gekennzeichnet, daß** die Einheit zur spektralen Analyse und Klassifikation (30) weiters eine Einheit zur zeitlichen Segmentierung (14) der im Analog-Digitalwandler (2) erzeugten digitalen Signale in zeitliche Blöcke umfaßt.

**5.** System nach Anspruch 4, **dadurch gekennzeichnet, daß** die Einheit zur spektralen Analyse und Klassifikation (30) weiters einen Spektral-Analysator (15), einen Cepstral-Analysator (16) und eine Einheit zur Berechnung der Signalenergie (17) umfaßt, deren Eingänge mit dem Ausgang der Einheit zur zeitlichen Segmentierung (14) verbunden sind.

**6.** System nach Anspruch 5, **dadurch gekennzeichnet, daß** die Ausgänge des Spektral-Analysators (15) und des Cepstral-Analysators (16) mit den Eingängen einer Einheit zur Dimensionsreduktion (18) verbunden sind, und daß der Ausgang der Einheit zur Dimensionsreduktion (18) mit einem ersten Eingang eines Klassifikators (19) und ein zweiter Eingang des Klassifikators (19) mit dem Ausgang der Einheit zur Berechnung der Signalenergie (17) verbunden sind, wobei der Ausgang des Klassifikators (19 durch den Alarm-Ausgang (20) gebildet ist.

**7.** System nach einem der vorhergehenden Ansprüche, **dadurch gekennzeichnet, daß** der Alarm-Ausgang (20) mit einer Lösch- und Warnanlage verbunden ist.

**8.** Verfahren zur automatischen Überwachung eines Verkehrsweges, insbesondere in einem Tunnel, wobei an vorbestimmbaren Meßpunkten entlang des zu überwachenden Verkehrsweges der Schall laufend aufgenommen und in Schall-Meßsignale gewandelt wird, **dadurch gekennzeichnet, daß** die den Meßpunkten zugeordneten Schall-Meßsignale spektral analysiert und bei Detektion einer Anomalie in zumindest einem der Schall-Meßsignale ein Alarm ausgelöst wird, sodaß im Bereich des Meßpunktes, dem das anomale Schall-Meßsignal zugeordnet ist, eine Notfalls-Maßnahme veranlaßt wird.

**10.** Verfahren nach Anspruch 9, **dadurch gekennzeichnet, daß** bei Detektion einer Anomalie weiters auf einem Monitor das Bildsignal einer im Bereich des Meßpunktes, dem das anomale Schall-Meßsignal zugeordnet ist, angeordneten Bildaufnahmevorrichtung, insbesondere einer Video-Kamera angezeigt und zugleich das anomale Schall-Meßsignal wiedergegeben wird.

**11.** Verfahren nach Anspruch 9 oder 10, **dadurch gekennzeichnet, daß** die den Meßpunkten zugeordneten Schall-Meßsignale in digitale Signale gewandelt und in Signalblöcke, vorzugsweise mit einer Blocklänge zwischen 50ms und 1500 ms, zeitlich segmentiert werden.

**12.** Verfahren nach Anspruch 11, **dadurch gekennzeichnet, daß** die einzelnen Signalblöcke mit einer Überlappung, vorzugsweise in einem Bereich von 20% bis 70%, aus den Schall-Meßsignalen extrahiert werden.

**13.** Verfahren nach einem der Ansprüche 9 bis 12, **dadurch gekennzeichnet, daß** an den Signalblökken eine Merkmalsextraktion durchgeführt wird durch:

i) Berechnung des Leistungsdichtespektrums durch Transformation aus dem Zeitbereich in den Frequenzbereich und
ii) Berechnung von Cepstrum-Koeffizienten durch Inverse Fourier-Transformation des logarithmierten Leistungsdichtespektrums,
iii) Berechnung der Signalenergie innerhalb einer vorbestimmbaren Fensterlänge,

und daß aus in den Schritten i) und ii) erhaltenen Merkmalsvektoren durch Dimensionsreduktion ein in seiner Dimension reduzierter Merkmalsvektor berechnet wird, welcher nachfolgend unter Berücksichtigung der in Schritt iii) berechneten Signalenergie einer Klassifikation unterzogen wird.

**14.** Verfahren nach Anspruch 13, **dadurch gekennzeichnet, daß** die Klassifikation durch einen Vergleich von in einem Lernmodus aus Lernsignalen ermittelten Klassenmodellen mit dem jeweils aktuellen Merkmalsvektor erhalten wird.

**FIG.1**

**FIG.2**

**FIG.3**

**FIG.4**

# FIG.5